# EUROPÄISCHE PATENTSCHRIFT

(11) **EP 3 055 847 B1**
(45) Veröffentlichungstag und Bekanntmachung des Hinweises auf die Patenterteilung: **24.02.2021**
(21) Anmeldenummer: 14777342.8
(22) Anmeldetag: 30.09.2014
(51) Int. Cl.: G08B 17/12, G06K 9/62, H04N 7/14, G06K 9/00

(54) **RAUCHERKENNUNGSVORRICHTUNG, VERFAHREN ZUR DETEKTION VON MINDESTENS EINEM RAUCHDETEKTIONSMERKMAL SOWIE COMPUTERPROGRAMM**
SMOKE DETECTION DEVICE, METHOD FOR DETECTION OF AT LEAST ONE SMOKE CHARACTERISTIC AND COMPUTER PROGRAM
DISPOSITIF DE DÉTECTION DE FUMÉE, PROCÉDÉ DE DÉTECTION D'AU MOINS UNE CARACTÉRISTIQUE DE DETECTION DE FUMÉE ET PROGRAMME INFORMATIQUE

(30) Priorität: 11.10.2013 DE 102013220553
(43) Veröffentlichungstag der Anmeldung: 17.08.2016
(73) Patentinhaber: Robert Bosch GmbH, 70442 Stuttgart (DE)
(72) Erfinder: STADLER, Anton, 83233 Bernau (DE); KUHN, Florian, 82229 Seefeld (DE); WINDISCH, Tjark, Zhuhai Guangdong 519070 (CN)
(86) Internationale Anmeldenummer: PCT/EP2014/070915
(87) Internationale Veröffentlichungsnummer: WO 2015/052042

(56) Entgegenhaltungen:
- EP-A1- 1 519 314
- EP-A1- 1 519 314
- WO-A1-2008/037293
- WO-A1-2008/037293
- US-A1- 2008 186 191
- US-A1- 2008 186 191

## Beschreibung

### Stand der Technik

Die Erfindung betrifft eine Raucherkennungsvorrichtung mit den Merkmalen des Oberbegriffs nach Anspruch 1. Die Erfindung betrifft auch ein Verfahren zur Detektion von mindestens einem Rauchdetektionsmerkmal sowie ein entsprechendes Computerprogramm.

Raucherkennungseinrichtungen dienen zur Detektion von Rauch und zur Auslösung eines Alarms im Falle eines detektierten Brands. Für die Detektion des Rauchs werden bestimmte Kenngrößen, wie z. B. Temperatur oder Dichte von Rauchpartikeln, gemessen. Durch die Verfügbarkeit von Bildsensoren können Raucherkennungseinrichtungen auch mit Videokameras zur Detektion des Rauchs betrieben werden.

So beschreibt z. B. die WO 2001 674 15 A1 einen bildgebenden Brandmelder, der dazu dient, aus einer aufgenommenen Bildfolge einen Brand zu erkennen. Als bildgebende Vorrichtung wird entweder eine Videokamera oder eine Infrarotkamera verwendet. Charakteristische Kenngrößen eines Brandes werden entweder einzeln oder in Kombination ausgewertet. Bei den aufgenommenen Bildfolgen wird eine Objektanalyse, eine Strukturanalyse oder eine Ortsfrequenzanalyse zur Ermittlung von Änderungen durchgeführt.

Als allgemeiner Stand der Technik beschreibt die Druckschrift EP 1 519 314 A1 ein Verfahren und Analysewerkzeug für die Überprüfung der Funktionstauglichkeit von Video-Überwachungsanlagen, sowie Messeinrichtung zur Durchführung des Verfahrens.

Die Druckschrift WO 2008/037293 A1 beschreibt ein Verfahren und eine Vorrichtung zur Detektion von Rauch durch Analyse mindestens eines von einer ein Gebiet überwachenden Videokamera aufgenommenen Videobildes. Mindestens ein sich bewegender Bereich wird auf das wahrscheinliche Vorliegen von Rauch überprüft. Die Überprüfung erfolgt durch Bestimmung der Richtung und Größe des sich bewegenden Bereiches. Bei positiven Prüfergebnis wird zumindest ein Teil des sich bewegenden Bereichs mit mindestens einer für Rauch charakteristischen Information ausgewertet.

Die Druckschrift US 2008/186191 A1, die den nächstkommenden Stand der Technik darstellt, offenbart eine Vorrichtung und eine Methode zur Raucherkennung, die eine Vielzahl von Bildern aufnimmt. Wenn sich in der Vielzahl von Bildern ein bewegtes Objekt befindet, wird ein näher zu auszuwertendes Bild festgelegt. Dieses Bild wird auf eine Variation der Chrominanz, eine Flackerfrequenz und ein Aufweichen von Konturen untersucht. Die Ergebnisse der Untersuchung werden mit vorgegebenen Merkmalen verglichen und ggf. ein Alarm ausgelöst.

### Offenbarung der Erfindung

Im Rahmen der Erfindung wird eine Raucherkennungsvorrichtung mit den Merkmalen des Anspruchs 1, ein Verfahren mit den Merkmalen des Anspruchs 13 sowie ein Computerprogramm mit den Merkmalen des Anspruchs 14 vorgeschlagen. Bevorzugte oder vorteilhafte Ausführungsformen ergeben sich aus den Unteransprüchen, der nachfolgenden Beschreibung sowie den beigefügten Figuren.

Erfindungsgemäß wird somit eine Raucherkennungsvorrichtung vorgeschlagen. Die Raucherkennungsvorrichtung ist mit mindestens einer Überwachungskamera verbindbar oder verbunden, die zur Aufnahme von Bildern eines Überwachungsbereichs ausgebildet ist. Optional umfasst die Raucherkennungsvorrichtung die mindestens eine Überwachungskamera. Besonders bevorzugt ist die Überwachungskamera zur Aufnahme von Bildern im VIS-Bereich ausgebildet. Die mindestens eine Überwachungskamera kann z. B. als eine CCD-Kamera oder als eine CMOS-Kamera oder in einer anderen Bauart ausgebildet sein. Bei dem Überwachungsbereich kann es sich beispielsweise um Räume oder Raumabschnitte in einem Gebäude oder auch um Außenbereiche in einer Umgebung handeln.

Der Überwachungsbereich umfasst mindestens ein ortsfestes Lichtobjekt. Insbesondere ist das ortsfeste Lichtobjekt in seiner Lageposition in dem Überwachungsbereich fest angeordnet. Insbesondere generiert und/oder emittiert das Lichtobjekt Lichtstrahlen. Beispielsweise handelt es sich bei dem mindestens einen ortsfesten Lichtobjekt um eine natürliche Beleuchtungseinrichtung wie ein Fenster. Jedoch ist es besonders bevorzugt, dass das mindestens eine ortsfeste Lichtobjekt als eine künstliche Beleuchtungseinrichtung ausgebildet ist. Beispielsweise ist die künstliche Beleuchtungseinrichtung eine Lampe, ein Scheinwerfer, eine Leuchte, eine Glühlampe, eine LED und/oder eine LED-Leuchtkette.

Die Raucherkennungsvorrichtung umfasst eine Auswerteeinrichtung, wobei die Auswerteeinrichtung geeignet und/oder ausgebildet ist, zur Raucherkennung in den von der Überwachungskamera übertragbaren bzw. übertragenen Bildern mindestens ein Rauchdetektionsmerkmal in dem Überwachungsbereich zu detektieren. Bei dem Rauchdetektionsmerkmal handelt es sich insbesondere um ein Kennzeichen zum Vorhandensein von Rauch in dem Überwachungsbereich. Zur Übertragung der Bilder ist die mindestens eine Überwachungskamera mit der Auswerteeinrichtung datentechnisch verbindbar bzw. verbunden. Die Datenübertragung der Bilder erfolgt vorzugsweise über ein Netzwerk. Bei dem Netzwerk kann es sich um ein kabelgebundenes Netzwerk, wie z. B. ein LAN oder um ein kabelloses Netzwerk, wie z. B. ein WLAN handeln. Es ist jedoch auch möglich, dass das Netzwerk oder zumindest ein Teilabschnitt der Übertragungsstrecke in dem Netzwerk als ein öffentliches Netzwerk, insbesondere ein Internet, ausgebildet ist. Beispielsweise ist die Auswerteeinrichtung als eine digitale Datenverarbeitungseinrichtung, insbesondere als ein Computer ausgebildet.

Optional umfasst die Raucherkennungsvorrichtung eine Steuereinrichtung oder ist mit dieser verbindbar. Die Steuereinrichtung ist insbesondere ausgebildet, bei der Raucherkennung durch die Auswerteeinrichtung die Ausgabe eines Alarmhinweises, z. B. an eine Zentrale, anzusteuern. Die Steuereinrichtung kann, z. B. gemeinsam mit der Auswerteeinrichtung, als eine digitale Datenverarbeitungseinrichtung, insbesondere als ein Computer ausgebildet sein.

Im Rahmen der Erfindung wird vorgeschlagen, dass die Auswerteeinrichtung in den Bildern das mindestens eine Lichtobjekt erfasst. Die Erfassung des Lichtobjekts kann beispielsweise manuell erfolgen. Z. B. wird das Lichtobjekt an einem Bildschirm, auf dem die Bilder des Überwachungsbereichs dargestellt sind, durch einen Benutzer markiert. Alternativ oder optional ergänzend kann die Erfassung des mindestens einen Lichtobjekts über eine automatische Erkennung des Lichtobjekts in den Bildern durch die Auswerteeinrichtung erfolgen. Die automatische Erkennung kann optional durch den Benutzer verifiziert werden.

Ferner wird vorgeschlagen, dass die Auswerteeinrichtung eine Veränderung der Lichtstreuung des mindestens einen erfassten Lichtobjekts als das mindestens eine Rauchdetektionsmerkmal detektiert. Vorzugsweise ist die Auswerteeinrichtung anhand des mindestens einen detektierten Rauchdetektionsmerkmals zur Raucherkennung in dem Überwachungsbereich ausgebildet.

Die erfindungsgemäße Raucherkennungsvorrichtung ermöglicht es, Rauch in verschiedenen Umgebungen in der unmittelbaren Nachbarschaft von Lichtobjekten zu erkennen. Da die Lichtstrahlen des Lichtobjekts bei Vorhandensein von Rauch verändert werden, so z: B. aufgrund einer Ablenkung an Rauchpartikeln, die zusammenfasssend als Streuung bezeichnet wird, bildet die Veränderung der Lichtstreuung einen zuverlässigen Indikator zur Raucherkennung.

Erfindungsgemäß erfasst die Auswerteeinrichtung einen Lichtobjektbereich und einen Lichtstreuungsbereich als das erfasste Lichtobjekt, wobei die Auswerteeinrichtung eine Veränderung des Lichtstreuungsbereichs als die Veränderung der Lichtstreuung detektiert. Beispielsweise umfasst der Lichtobjektbereich den durch die Auswerteeinrichtung erfassten Flächeninhalt und/oder Konturenverlauf des Lichtobjekts. Bevorzugt ist der Lichtstreuungsbereich ein an den Lichtobjektbereich angrenzender Bereich. Insbesondere ist der Lichtstreuungsbereich durch eine Volumenlichtstreuung der emittierten Lichtstrahlen an Rauchpartikeln in dem Volumen des Überwachungsbereichs zwischen dem Lichtobjekt und der Überwachungskamera gebildet. Durch die optische Projektion der Überwachungskamera in Richtung des Lichtobjekts erscheint der Lichtstreuungsbereich z. B. wie ein Rahmen oder ein Hof um das Lichtobjekt. Bei einer bevorzugten Ausführungsform hält die Auswerteeinrichtung Daten zu einem Referenzlichtobjekt mit einem Referenzlichtobjektbereich und/oder einem Referenzlichtstreuungsbereich ohne Rauchpartikel vor. Insbesondere umfasst der Referenzlichtobjektbereich den Flächeninhalt und/oder den Konturenverlauf des Referenzlichtobjekts. Der Referenzlichtstreuungsbereich ist ein an den Referenzlichtobjektbereich angrenzender Bereich. Z. B. ist der Referenzlichtstreuungsbereich durch eine Volumenlichtstreuung der emittierten Lichtstrahlen an Staubpartikeln gebildet. In der Regel entspricht der Referenzlichtstreuungsbereich zumindest in guter Näherung dem Flächeninhalt und/oder dem Konturenverlauf des Referenzlichtobjektbereichs. Lediglich im Idealfall weist das Referenzlichtobjekt keinen Referenzlichtstreuungsbereich auf, so z. B., wenn keine Volumenlichtstreuung der emittierten Lichtstrahlen vorliegt. Die Auswerteeinrichtung vergleicht zur Detektion der Veränderung der Lichtstreuung das Referenzlichtobjekt mit dem erfassten Lichtobjekt. Beispielsweise vergleicht die Auswerteeinrichtung den Referenzlichtobjektbereich mit dem Lichtobjektbereich und/oder den Referenzlichtstreuungsbereich mit dem Lichtstreuungsbereich.

In einer möglichen Umsetzung der Erfindung ist das mindestens eine Rauchdetektionsmerkmal eine durch die Veränderung der Lichtstreuung erzeugte Veränderung des Konturenverlaufs des erfassten Lichtobjekts, insbesondere des Lichtobjektbereichs. Beim Vorhandensein von Rauch wird die Lichtstreuung insbesondere derart verändert, dass ein veränderter Konturenverlauf durch die Auswerteeinrichtung detektiert wird. Vorzugsweise wird das mindestens eine Rauchdetektionsmerkmal durch einen Vergleich des Konturenverlaufs des Referenzlichtobjekts, insbesondere des Referenzlichtobjektbereichs mit dem Konturenverlauf des erfassten Lichtobjekts, insbesondere des Lichtobjektbereichs detektiert. Beispielsweise werden von den Konturenverläufen des Referenzlichtobjekts und des erfassten Lichtobjekts Längen, Krümmungen, Kanten und/oder deren Lagen miteinander verglichen.

Da Rauch in der Regel stets nach oben aufsteigt, lagert sich dieser insbesondere unterhalb einer Decke, sofern vorhanden, des Überwachungsbereichs an. Somit erfolgt bei einer Anordnung des ortsfesten Lichtobjekts in Deckennähe insbesondere zunächst eine Ansammlung des Rauchs in einem oberen Bereich des Lichtobjekts. Vor diesem Hintergrund ist bevorzugt, dass die in dem oberen Bereich verlaufenden Konturenverläufe des Referenzlichtobjekts und des erfassten Lichtobjekts miteinander verglichen werden. Durch die Anordnung des ortsfesten Lichtobjekts in Deckennähe erfolgt durch die zuerst in Deckennähe zunehmende Rauchintensität eine zur Rauchentstehung zeitnahe Veränderung der Lichtstreuung. Auf diese Weise ist bei Vorhandensein von Rauch im Überwachungsbereich eine schnelle und zuverlässige Detektion des Rauchdetektionsmerkmals umgesetzt.

Bei einer bevorzugten Weiterbildung weist der Konturenverlauf des Referenzlichtobjekts mindestens einen Eckbereich auf, wobei die Auswerteeinrichtung das mindestens eine Rauchdetektionsmerkmal als eine Abrundung des Eckbereichs des erfassten Lichtobjekts detektiert. Z. B. ist das Referenzlichtobjekt zur Ausbildung des mindestens einen Eckbereichs im Konturenverlauf rechteckig ausgebildet. Durch das Vorhandensein des Rauchs wird die Lichtstreuung derart verändert, dass der mindestens eine Eckbereich abgerundet und optional vergrößert ist. Besonders bevorzugt ist der Eckbereich in dem zur Rauchaufstiegsrichtung oberen Bereich, besonders bevorzugt im oberen Drittel des Referenzlichtobjekts angeordnet. Somit ist die Detektion des Rauchdetektionsmerkmals aufgrund der zuerst in Deckennähe zunehmende Rauchintensität auf schnelle und zuverlässige Weise umgesetzt.

Eine bevorzugte Ausführungsform sieht vor, dass das mindestens eine Rauchdetektionsmerkmal eine durch die Veränderung der Lichtstreuung erzeugte Vergrößerung des erfassten Lichtobjekts, insbesondere des Lichtobjektbereichs und/oder des Lichtstreuungsbereichs ist. Besonders bevorzugt wird das mindestens eine Rauchdetektionsmerkmal durch einen Vergleich des Umfangs und/oder der Fläche des Referenzlichtobjekts mit dem Umfang bzw. der Fläche des erfassten Lichtobjekts detektiert.

In einer bevorzugten Ausgestaltung der Erfindung ist das mindestens eine Rauchdetektionsmerkmal eine durch die Veränderung der Lichtstreuung erzeugte Aufhellung des Lichtstreuungsbereichs des erfassten Lichtobjekts. Das mindestens eine Rauchdetektionsmerkmal wird insbesondere durch einen Vergleich des Lichtstreuungsbereichs des erfassten Lichtobjekts mit dem Referenzlichtstreuungsbereich des Referenzlichtobjekts detektiert. Besonders bevorzugt ist eine Lichtintensität des Lichtstreuungsbereichs des erfassten Lichtobjekts zur Detektion als das Rauchdetektionsmerkmal im Vergleich zu einer Lichtintensität des Referenzlichtstreuungsbereichs des Referenzlichtobjekts um mindestens fünf Prozent, insbesondere um mindestens zehn Prozent im Speziellen um mindestens 15 Prozent gestiegen. Insbesondere handelt es sich bei der Lichtintensität um die maximale oder um die durchschnittliche Lichtintensität der Lichtstreuung im Lichtstreuungs- bzw. Referenzlichtstreuungsbereich.

Insbesondere führt Rauch z. B. aufgrund der Ablenkung der emittierten Lichtstrahlen an den Rauchpartikeln zu einer Kontrasterniedrigung. Somit weist das erfasste Lichtobjekt, insbesondere der Lichtobjektbereich zum Lichtstreuungsbereich und/oder der Lichtstreuungsbereich zur Umgebung bei Vorhandensein von Rauch in der Regel einen weicheren Kontrast im Vergleich zum Referenzlichtobjekt auf. Vor diesem Hintergrund ist bevorzugt, dass das mindestens eine Rauchdetektionsmerkmal eine durch die Veränderung der Lichtstreuung erzeugte Veränderung, insbesondere die Erniedrigung des Kontrasts des erfassten Lichtobjekts ist. Vorzugsweise ist das mindestens eine Rauchdetektionsmerkmal durch einen Vergleich des Kontrasts des Referenzlichtobjekts mit dem Kontrast des erfassten Lichtobjekts detektiert.

In einer möglichen Ausgestaltung der Erfindung umfasst die Raucherkennungsvorrichtung eine Anzeigeeinrichtung, wobei die Anzeigeeinrichtung zur Anzeige der von der Überwachungskamera übertragbaren bzw. übertragenen Bilder ausgebildet ist. Insbesondere ist die Anzeigeeinrichtung ein Bildschirm. Vorzugsweise übermittelt die Auswerteeinrichtung das detektierte Rauchdetektionsmerkmal an die Anzeigeeinrichtung, wobei die Anzeigeeinrichtung zur bildgebenden Anzeige des Rauchdetektionsmerkmals in den Bildern des Überwachungsbereichs ausgebildet ist. Auf diese Weise wird dem Benutzer, der für die Alarmverifikation zuständig ist, zeitnah auf den Bildbereich mit dem detektierten Rauchdetektionsmerkmal hingewiesen.

Bei einer bevorzugten Ausführungsform wird die erfasste Veränderung der Lichtstreuung bei einer Unterschreitung eines vorgegebenen Zeitgrenzwerts als das Rauchdetektionsmerkmal verworfen. Die zeitabhängige Auswertung hilft Täuschungsgrößen, wie z. B. an dem Lichtobjekt vorbeilaufende Personen, von tatsächlichen Rauchsituationen zu trennen und führt somit zu einer zuverlässigen Erkennung des Rauchdetektionsmerkmals.

Einen weiteren Gegenstand der Erfindung betrifft ein Verfahren zur Detektion des mindestens einen Rauchdetektionsmerkmals mit einer Raucherkennungsvorrichtung, insbesondere einer Raucherkennungsvorrichtung nach der vorhergehenden Beschreibung. Die Auswerteeinrichtung der Raucherkennungsvorrichtung erfasst in den Bildern das mindestens eine Lichtobjekt, wobei die Auswerteeinrichtung die Veränderung der Lichtstreuung des mindestens einen erfassten Lichtobjekts als das mindestens eine Rauchdetektionsmerkmal detektiert.

Einen weiteren Gegenstand der Erfindung betrifft ein Computerprogramm mit Programmcode-Mitteln mit den Merkmalen des Anspruchs 15.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
- Figuren 1a, 1b: in einer schematischen Darstellung eine Raucherkennungsvorrichtung als ein Ausführungsbeispiel der Erfindung;
- Figuren 2a, 2b: die Detektion eines ersten möglichen Rauchdetektionsmerkmals durch eine Auswerteeinrichtung der Raucherkennungsvorrichtung aus Figur 1;
- Figuren 3a, 3b: die Detektion eines zweiten möglichen Rauchdetektionsmerkmals durch die Auswerteeinrichtung der Raucherkennungsvorrichtung aus Figur 1,
- Figuren 4a, 4b: die Detektion eines dritten möglichen Rauchdetektionsmerkmals durch die Auswerteeinrichtung der Raucherkennungsvorrichtung aus Figur 1.

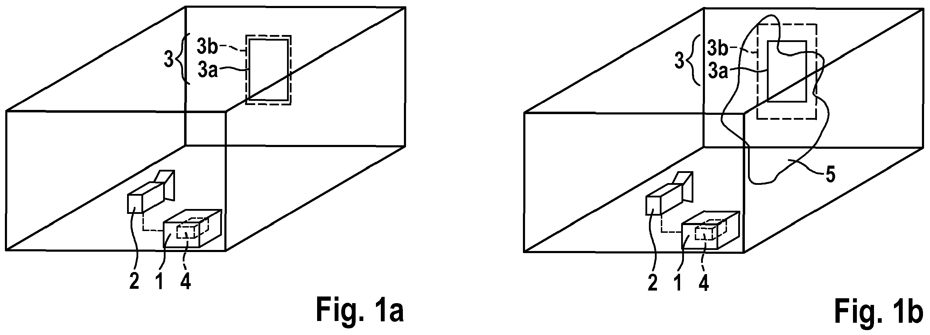

Figur 1a zeigt eine Raucherkennungsvorrichtung 1. Die Raucherkennungsvorrichtung 1 ist datentechnisch mit einer Überwachungskamera 2 verbunden, die zur Aufnahme von Bildern eines Überwachungsbereichs ausgebildet ist. Optional umfasst die Raucherkennungsvorrichtung 1 die Überwachungskamera 2. Bei diesem Ausführungsbeispiel ist der von der Überwachungskamera 2 aufgenommene Überwachungsbereich zumindest ein Abschnitt des schematisch dargestellten Raumes. Der Überwachungsbereich der Überwachungskamera 2 umfasst ein ortsfestes Lichtobjekt 3. Bei dem ortsfesten Lichtobjekt 3 kann es sich um eine künstliche Beleuchtungseinrichtung, wie z. B. um eine Lampe, handeln.

Das ortsfeste Lichtobjekt 3 weist einen Lichtobjektbereich 3a auf. Der Lichtobjektbereich 3a ist durch einen Konturenverlauf und/oder durch einen Flächeninhalt des Konturenverlaufs des Lichtobjekts 3 gebildet. Das ortsfeste Lichtobjekt 3 weist z. B. aufgrund einer Volumenlichtstreuung an Staubpartikeln einen Lichtstreuungsbereich 3b auf, der i. d. R. einen geringfügig größeren Konturenverlauf und/oder Flächeninhalt im Vergleich zum Lichtobjektbereich 3a aufweist.

In der Figur 1b ist eine Rauchwolke in dem Überwachungsbereich dargestellt, die zumindest teilweise zu einer Volumenstreuung der emittierten Lichtstrahlen des Lichtobjekts 3 führt. Die Volumenstreuung an Rauchpartikeln bewirkt, dass der Lichtstreuungsbereich 3b im Vergleich zu dem Lichtstreuungsbereich 3b in Figur 1a verändert, z. B. vergrößert ist.

Die Raucherkennungsvorrichtung 1 umfasst eine Auswerteeinrichtung 4, die zur Raucherkennung ausgebildet ist. Zur Raucherkennung detektiert die Auswerteeinrichtung 4 in den Bildern der Überwachungskamera 2 mindestens ein Rauchdetektionsmerkmal. Das Rauchdetektionsmerkmal ist ein Kennzeichen zum Vorhandensein von Rauch in dem Überwachungsbereich.

Die Auswerteeinrichtung 4 ist ausgebildet, in den Bildern das mindestens eine Lichtobjekt 3 mit dem Lichtobjektbereich 3a und dem Lichtstreuungsbereich 3b zu erfassen. Ferner ist die Auswerteeinrichtung 4 ausgebildet, eine Veränderung einer Lichtstreuung des erfassten Lichtobjekts 3 als das mindestens eine Rauchdetektionsmerkmal zu detektieren. Für die Erfassung der Lichtstreuung wird die Lichtstreuung des Lichtobjekts 3 von der Überwachungskamera 2 z. B. zumindest teilweise als Seiten- und/oder als Gegenlicht erfasst. Da bei Vorhandensein von Rauch insbesondere durch die Volumenlichtstreuung an Rauchpartikeln bzw. Rauchaerosolen eine Veränderung der Lichtstreuung resultiert, bildet die Lichtstreuung des Lichtobjekts 3 einen zuverlässigen Indikator zur Raucherkennung.

Zur Detektion der Veränderung der Lichtstreuung hält die Auswerteeinrichtung 4 mindestens ein Referenzlichtobjekt 3' mit einem Referenzlichtobjektbereich 3a' und/oder einem Referenzlichtstreuungsbereich 3b' vor, wobei das Referenzlichtobjekt 3' mit dem erfassten Lichtobjekt 3 verglichen wird. Das Bild mit dem Referenzlichtobjekt 3' ist zur Erfassung der ordnungsgemäßen Lichtstreuung in einem rauchfreien Überwachungsbereich aufgenommen. Optional hält die Auswerteeinrichtung 4 mehrere Referenzlichtobjekte 3' vor. Diese sind insbesondere dann von Vorteil, falls das Lichtobjekt 3 als eine natürliche Beleuchtungseinrichtung ausgebildet ist. Besonders die hieraus resultierenden verschiedenen Lichtstreuverhältnisse, die z. B. je nach der Tagesuhrzeit, der Sommer-/Winterzeit oder je nach den Schön-/Schlechtwetterverhältnissen variieren können, werden durch das Heranziehen der verschiedenen Referenzbilder berücksichtigt.

Beispielhaft werden in den folgenden Figuren verschiedene Rauchdetektionsmerkmale erläutert, die durch das Vorhandensein von Rauch resultieren können.

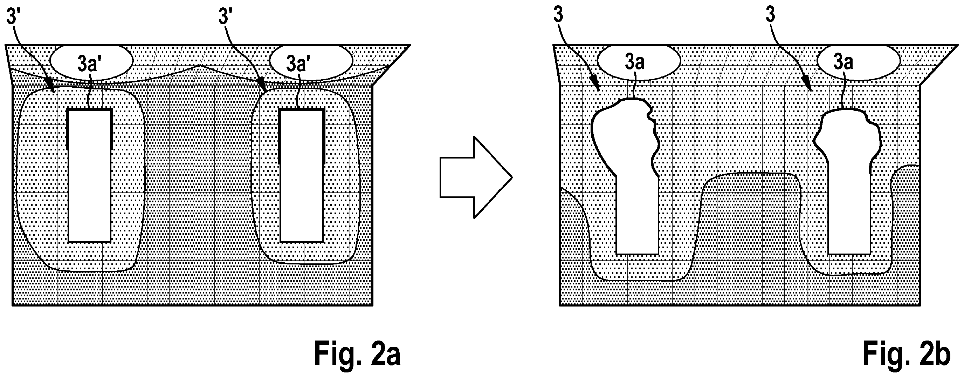

Die Figur 2a zeigt das Referenzlichtobjekt 3' mit dem Referenzlichtobjektbereich 3a' und die Figur 2b das erfasste Lichtobjekt 3 mit dem Lichtobjektbereich 3a. Das Rauchdetektionsmerkmal ist in Figur 2b dargestellt und ist eine durch die Veränderung der Lichtstreuung erzeugte Veränderung des Konturenverlaufs des Lichtobjektbereichs 3a des erfassten Lichtobjekts 3. Der obere Abschnitt des Konturenverlaufs des Referenzlichtobjekts 3' ist in Figur 2b nicht mehr erkennbar, sondern erscheint durch den Konturenverlauf des Lichtobjektbereichs 3a des erfassten Lichtobjekts 3 verändert. Das Rauchdetektionsmerkmal wird durch einen Vergleich des Konturenverlaufs 3a' des Referenzlichtobjekts 3 mit dem Konturenverlauf 3a des erfassten Lichtobjekts 3 detektiert.

Bei diesem Ausführungsbeispiel weist der Konturenverlauf 3a des Referenzlichtobjekts 3' vier Eckbereiche auf, wobei zwei Eckbereiche in einem zur Rauchaufstiegsrichtung oberen Bereich des Referenzlichtobjekts 3' angeordnet sind. Durch den Rauch wird die Lichtstreuung derart verändert, dass die oberen zwei Eckbereiche in Figur 2b abgerundet sind. Die Auswerteeinrichtung 4 detektiert das Rauchdetektionsmerkmal als Abrundungen der Eckbereiche des Konturenverlaufs des Lichtobjektbereichs 3a. Da das Lichtobjekt 3 in dem Überwachungsbereich deckennah angeordnet ist, liegt eine Zunahme der Rauchintensität zunächst an den oberen Eckbereichen des Lichtobjekts 3 vor. Auf diese Weise ist das Rauchdetektionsmerkmal durch die Auswerteeinrichtung 4 zeitnah detektierbar.

Wie aus den Figuren 2a und 2b gut erkennbar, liegt bereichsweise eine Vergrößerung des Lichtobjektsbereichs 3a an dem Konturenverlauf der abgerundeten Eckbereiche vor. Daher ist es möglich, dass das Rauchdetektionsmerkmal eine durch die Veränderung der Lichtstreuung erzeugte Vergrößerung des Lichtobjektbereichs 3a des erfassten Lichtobjekts 3 ist. Die Vergrößerung kann z. B. durch einen Vergleich des Umfangs und/oder der Fläche des Referenzlichtobjektbereichs 3a' mit dem Umfang bzw. der Fläche des erfassten Lichtobjektsbereichs 3a detektiert werden.

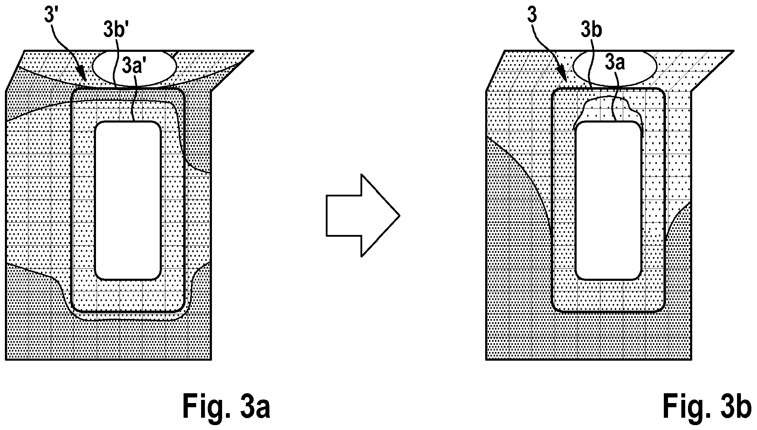

Die Figur 3a zeigt das Referenzlichtobjekt 3' mit dem Referenzlichtobjektbereich 3a' sowie dem Referenzlichtstreuungsbereich 3b' und die Figur 3b das erfasste Lichtobjekt 3 mit dem Lichtobjektbereich 3a und dem Lichtstreuungsbereich 3b. Das Rauchdetektionsmerkmal ist in Figur 3b dargestellt und ist eine durch die Veränderung der Lichtstreuung erzeugte Aufhellung des Lichtstreuungsbereichs 3b des erfassten Lichtobjekts 3. Das Rauchdetektionsmerkmal wird durch einen Vergleich des Referenzlichtstreuungsbereichs 3b' des Referenzlichtobjekts 3 mit dem Lichtstreuungsbereich 3b des erfassten Lichtobjekts 3 detektiert. Zur Erfassung der Aufhellung ist z. B. eine durchschnittliche und/oder maximale Lichtintensität des Lichtstreuungsbereichs 3b im Vergleich zu einer Lichtintensität des Referenzlichtstreuungsbereichs 3a um zehn Prozent gestiegen.

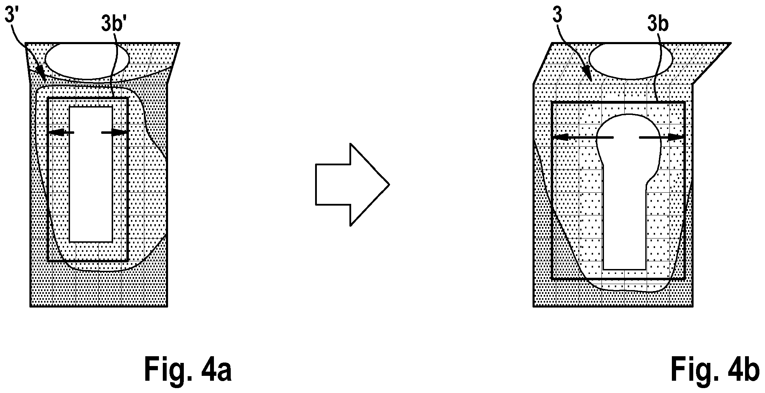

Die Figur 4a zeigt das Referenzlichtobjekt 3' mit dem Referenzlichtstreuungsbereich 3b' und die Figur 4b das erfasste Lichtobjekt 3 mit dem Lichtstreuungsbereich 3b. Das Rauchdetektionsmerkmal ist in Figur 4b dargestellt und ist eine durch die Veränderung der Lichtstreuung erzeugte, zumindest bereichsweise Vergrößerung des Lichtstreuungsbereichs 3b des erfassten Lichtobjekts 3. Wie an den Gradientenpfeilen gut erkennbar, ist der Lichtstreuungsbereich 3b im Vergleich zu dem Referenzlichtstreuungsbereich 3b' des Referenzlichtobjekts 3' erweitert. Die Vergrößerung kann z. B. durch einen Vergleich des Umfangs, der Fläche und/oder der Gradientenpfeile des Referenzlichtstreuungsbereich 3b' mit dem Umfang, der Fläche bzw. mit den Gradientenpfeilen des erfassten Lichtstreuungsbereichs 3b detektiert werden.

Ein alternatives oder optional ergänzendes Raucherkennungsmerkmal in Figur 4b ist eine durch die Veränderung der Lichtstreuung erzeugte Veränderung eines Kontrasts des erfassten Lichtobjekts 3. Bei diesem Ausführungsbeispiel ist die Kontrasterniedrigung des Lichtstreuungsbereichs 3b des erfassten Lichtobjekts 3 zur Umgebung dargestellt. Rauchpartikel bzw. Rauchaerosole bewirken i. d. R. einen weicheren, kontrastärmeren Übergang des Lichtstreuungsbereichs 3b zur Umgebung. Das Rauchdetektionsmerkmal wird z. B. mittels eines Vergleichs des Helligkeitsverlaufs, im Speziellen mittels eines Vergleichs des Abstands von einem hellsten und dunkelsten Bildpunkt des Lichtstreuungsbereichs 3b mit dem des Referenzlichtstreuungsbereichs 3b' detektiert.

## Patentansprüche

1. Raucherkennungsvorrichtung (1),
wobei die Raucherkennungsvorrichtung (1) mit mindestens einer Überwachungskamera (2) verbindbar ist, die zur Aufnahme von Bildern eines Überwachungsbereichs ausgebildet ist, wobei der Überwachungsbereich mindestens ein Lichtstrahlen generierendes und/oder emittierendes ortsfestes Lichtobjekt (3) umfasst, wobei das mindestens eine ortsfeste Lichtobjekt als ein Fenster oder eine Künstliche Beleuchtungseinrichtung ausgebildet ist,
mit einer Auswerteeinrichtung (4), wobei die Auswerteeinrichtung (4) ausgebildet ist, zur Raucherkennung in den Bildern mindestens ein Rauchdetektionsmerkmal in dem Überwachungsbereich zu detektieren,
wobei die Auswerteeinrichtung (4) in den Bildern das mindestens eine Lichtobjekt erfasst, wobei die Auswerteeinrichtung (4) eine Veränderung einer Lichtstreuung des mindestens einen erfassten ortsfesten Lichtobjekts (3) als das
mindestens eine Rauchdetektionsmerkmal detektiert,
**dadurch gekennzeichnet, dass**
dass die Auswerteeinrichtung (4) einen Lichtobjektbereich (3a) und einen Lichtstreuungsbereich (3b) als das erfasste ortsfeste Lichtobjekt (3) erfasst, wobei der
Lichtobjektbereich (3a) einen durch die Auswerteeinrichtung (4) erfassten Flächeninhalt und/oder Konturenverlauf des ortsfesten Lichtobjekts (3) umfasst und
wobei der Lichtstreuungsbereich (3b) ein an den Lichtobjektbereich (3a) angrenzender Bereich ist, wobei die Auswerteeinrichtung (4) eine Veränderung des Lichtstreuungsbereichs (3b) als die Veränderung der Lichtstreuung detektiert.

2. Raucherkennungsvorrichtung (1) nach Anspruch 1, **dadurch gekennzeichnet, dass** die Auswerteeinrichtung (4) ein Referenzlichtobjekt (3') mit einem Referenzlichtobjektbereich (3a') und/oder einem Referenzlichtstreuungsbereich (3b') vorhält, wobei die Auswerteeinrichtung (4) zur Detektion der Veränderung der Lichtstreuung das Referenzlichtobjekt (3') mit dem erfassten ortsfesten Lichtobjekt (3) vergleicht.

3. Raucherkennungsvorrichtung (1) nach einem der vorhergehenden Ansprüche, **dadurch gekennzeichnet, dass** das mindestens eine Rauchdetektionsmerkmal eine durch die Veränderung der Lichtstreuung erzeugte Veränderung eines Konturenverlaufs des erfassten ortsfesten Lichtobjekts (3) ist.

4. Raucherkennungsvorrichtung (1) nach Anspruch 3, **dadurch gekennzeichnet, dass** das mindestens eine Rauchdetektionsmerkmal durch einen Vergleich eines Konturenverlaufs des Referenzlichtobjekts (3') mit dem Konturenverlauf des erfassten ortsfesten Lichtobjekts (3) detektiert wird.

5. Raucherkennungsvorrichtung (1) nach Anspruch 4, **dadurch gekennzeichnet, dass** der Konturenverlauf des Referenzlichtobjekts (3') mindestens einen Eckbereich aufweist, wobei die Auswerteeinrichtung (4) das mindestens eine Rauchdetektionsmerkmal als eine Abrundung des Eckbereichs des erfassten ortsfesten Lichtobjekts (3) detektiert.

6. Raucherkennungsvorrichtung (1) nach Anspruch 5, **dadurch gekennzeichnet, dass** der Eckbereich in einem zur Rauchaufstiegsrichtung oberen Bereich des Referenzlichtobjekts (3') angeordnet ist.

7. Raucherkennungsvorrichtung (1) nach einem der vorhergehenden Ansprüche, **dadurch gekennzeichnet, dass** das mindestens eine Rauchdetektionsmerkmal eine durch die Veränderung der Lichtstreuung erzeugte Vergrößerung des erfassten ortsfesten Lichtobjekts (3) ist.

8. Raucherkennungsvorrichtung (1) nach Anspruch 7, **dadurch gekennzeichnet, dass** das mindestens eine Rauchdetektionsmerkmal durch einen Vergleich des Umfangs und/oder der Fläche des Referenzlichtobjekts (3') mit dem Umfang bzw. der Fläche des erfassten ortsfesten Lichtobjekts (3) detektiert wird.

9. Raucherkennungsvorrichtung (1) nach einem der vorhergehenden Ansprüche, **dadurch gekennzeichnet, dass** das mindestens eine Rauchdetektionsmerkmal eine durch die Veränderung der Lichtstreuung erzeugte Aufhellung des Lichtstreuungsbereichs des erfassten ortsfesten Lichtobjekts (3) ist.

10. Raucherkennungsvorrichtung (1) einem der vorhergehenden Ansprüche, **dadurch gekennzeichnet, dass** das mindestens eine Rauchdetektionsmerkmal eine durch die Veränderung der Lichtstreuung erzeugte Veränderung eines Kontrasts des erfassten ortsfesten Lichtobjekts (3) ist.

11. Raucherkennungsvorrichtung (1) nach einem der vorhergehenden Ansprüche, **dadurch gekennzeichnet, dass** die Raucherkennungsvorrichtung (1) eine Anzeigeeinrichtung umfasst, wobei die Anzeigeeinrichtung zur Anzeige der Bilder ausgebildet ist, wobei die Auswerteeinrichtung (4) das detektierte Rauchdetektionsmerkmal an die Anzeigeeinrichtung übermittelt, wobei die Anzeigeeinrichtung zur bildgebenden Anzeige des Rauchdetektionsmerkmals in den Bildern des Überwachungsbereichs ausgebildet ist.

12. Raucherkennungsvorrichtung (1) nach einem der vorhergehenden Ansprüche, **dadurch gekennzeichnet, dass** die erfasste Veränderung der Lichtstreuung bei einer Unterschreitung eines vorgegebenen Zeitgrenzwerts als das Rauchdetektionsmerkmal verworfen wird.

13. Verfahren zur Detektion mindestens eines Rauchdetektionsmerkmals mit einer Raucherkennungsvorrichtung (1) nach einem der vorhergehenden Ansprüche, wobei eine Auswerteeinrichtung (4) der Raucherkennungsvorrichtung (1) in Bildern mindestens ein Lichtobjekt erfasst, wobei die Auswerteeinrichtung (4) eine Veränderung einer Lichtstreuung des mindestens einen erfassten ortsfesten Lichtobjekts (3) als das mindestens eine Rauchdetektionsmerkmal detektiert.

14. Computerprogramm mit Programmcode-Mitteln, um alle Schritte des Verfahrens nach Anspruch 13 durchzuführen, wenn das Programm auf einem Computer und/oder auf der Raucherkennungsvorrichtung (1) von jedem Beliebigen der Ansprüche 1 bis 12 ausgeführt wird.

## Claims

1. Smoke detector (1),
wherein the smoke detector (1) is connectable to at least one monitoring camera (2) that is embodied for recording images of a monitoring region, wherein the monitoring region comprises at least one spatially fixed light object (3) that generates and/or emits light rays, wherein the at least one spatially fixed light object is embodied in the form of a window or an artificial illumination device,
having an evaluation device (4), wherein the evaluation device (4) is embodied to detect at least one smoke detection feature in the monitoring region to detect smoke in the images,
wherein the evaluation device (4) captures the at least one light object in the images, wherein the evaluation device (4) detects a change in light scattering of the at least one captured spatially fixed light object (3) as the at least one smoke detection feature, **characterized in that**
the evaluation device (4) captures a light object region (3a) and a light scattering region (3b) as the captured spatially fixed light object (3), wherein the light object region (3a) comprises an area and/or contour profile of the spatially fixed light object (3) captured by the evaluation device (4) and
wherein the light scattering region (3b) is a region adjoining the light object region (3a), wherein the evaluation device (4) detects a change in the light scattering region (3b) as the change in the light scattering.

2. Smoke detector (1) according to Claim 1, **characterized in that** the evaluation device (4) stores a reference light object (3') with a reference light object region (3a') and/or a reference light scattering region (3b'), wherein the evaluation device (4) compares the reference light object (3') with the captured spatially fixed light object (3) to detect the change in the light scattering.

3. Smoke detector (1) according to either of the preceding claims, **characterized in that** the at least one smoke detection feature is a change in a contour profile of the captured spatially fixed light object (3) brought about by the change in the light scattering.

4. Smoke detector (1) according to Claim 3, **characterized in that** the at least one smoke detection feature is detected by comparing a contour profile of the reference light object (3') with the contour profile of the captured spatially fixed light object (3).

5. Smoke detector (1) according to Claim 4, **characterized in that** the contour profile of the reference light object (3') has at least one corner region, wherein the evaluation device (4) detects the at least one smoke detection feature as a rounding of the corner region of the captured spatially fixed light object (3).

6. Smoke detector (1) according to Claim 5, **characterized in that** the corner region is arranged in an upper region of the reference light object (3') with respect to the direction in which the smoke rises.

7. Smoke detector (1) according to one of the preceding claims, **characterized in that** the at least one smoke detection feature is an enlargement of the captured spatially fixed light object (3) brought about by the change in the light scattering.

8. Smoke detector (1) according to Claim 7, **characterized in that** the at least one smoke detection feature is detected by comparing the perimeter and/or the area of the reference light object (3') with the perimeter or the area of the captured spatially fixed light object (3).

9. Smoke detector (1) according to one of the preceding claims, **characterized in that** the at least one smoke detection feature is a brightening of the light scattering region of the captured spatially fixed light object (3) brought about by the change in the light scattering.

10. Smoke detector (1) according to one of the preceding claims, **characterized in that** the at least one smoke detection feature is a change in contrast of the captured spatially fixed light object (3) brought about by the change in the light scattering.

11. Smoke detector (1) according to one of the preceding claims, **characterized in that** the smoke detector (1) comprises a display device, wherein the display device is embodied to display the images, wherein the evaluation device (4) transmits the detected smoke detection feature to the display device, wherein the display device is embodied to display, by imaging, the smoke detection feature in the images of the monitoring region.

12. Smoke detector (1) according to one of the preceding claims, **characterized in that** the captured change in the light scattering is discarded as the smoke detection feature if a time limit value falls below a specified time limit value.

13. Method for detecting at least one smoke detection feature with a smoke detector (1) according to one of the preceding claims, wherein an evaluation device (4) of the smoke detector (1) captures at least one light object in images, wherein the evaluation device (4) detects a change in light scattering of the at least one captured spatially fixed light object (3) as the at least one smoke detection feature.

14. Computer program with program code means for performing all the steps of the method according to Claim 13 when the program is executed on a computer and/or on the smoke detector (1) according to any one of Claims 1 to 12.

## Revendications

1. Dispositif de détection de fumée (1),
le dispositif de détection de fumée (1) pouvant être relié à au moins une caméra de surveillance (2) qui est réalisée pour enregistrer des images d'une zone de surveillance, la zone de surveillance comprenant au moins un objet lumineux fixe (3) générant et/ou émettant des rayons lumineux, ledit au moins un objet lumineux fixe étant réalisé sous la forme d'une fenêtre ou d'un dispositif d'éclairage artificiel,
comprenant un dispositif d'évaluation (4), le dispositif d'évaluation (4) étant réalisé pour détecter sur les images au moins une particularité de détection de fumée dans la zone de surveillance en vue de la détection de fumée,
le dispositif d'évaluation (4) saisissant sur les images ledit au moins un objet lumineux, le dispositif d'évaluation (4) détectant comme ladite au moins une particularité de détection de fumée une modification d'une diffusion de lumière dudit au moins un objet lumineux fixe (3) saisi,
**caractérisé en ce que** le dispositif d'évaluation (4) saisit comme l'objet lumineux fixe (3) saisi une zone d'objet lumineux (3a) et une zone de diffusion de lumière (3b), la zone d'objet lumineux (3a) comprenant une superficie et/ou un tracé de contour de l'objet lumineux fixe (3) saisi(e) par le dispositif d'évaluation (4), et
la zone de diffusion de lumière (3b) étant une zone adjacente à la zone d'objet lumineux (3a), le dispositif d'évaluation (4) détectant comme la modification de la diffusion de lumière une modification de la zone de diffusion de lumière (3b).

2. Dispositif de détection de fumée (1) selon la revendication 1, **caractérisé en ce que** le dispositif d'évaluation (4) fournit un objet lumineux de référence (3') ayant une zone d'objet lumineux de référence (3a') et/ou une zone de diffusion de lumière de référence (3b'), le dispositif d'évaluation (4) comparant l'objet lumineux de référence (3') avec l'objet lumineux fixe (3) saisi en vue de détecter la modification de la diffusion de lumière.

3. Dispositif de détection de fumée (1) selon l'une quelconque des revendications précédentes, **caractérisé en ce que** ladite au moins une particularité de détection de fumée est une modification d'un tracé de contour de l'objet lumineux fixe (3) saisi, générée par la modification de la diffusion de lumière.

4. Dispositif de détection de fumée (1) selon la revendication 3, **caractérisé en ce que** ladite au moins une particularité de détection de fumée est détectée par une comparaison d'un tracé de contour de l'objet lumineux de référence (3') avec le tracé de contour de l'objet lumineux fixe (3) saisi.

5. Dispositif de détection de fumée (1) selon la revendication 4, **caractérisé en ce que** le tracé de contour de l'objet lumineux de référence (3') présente au moins une zone d'angle, le dispositif d'évaluation (4) détectant ladite au moins une particularité de détection de fumée sous la forme d'un arrondi de la zone d'angle de l'objet lumineux fixe (3) saisi.

6. Dispositif de détection de fumée (1) selon la revendication 5, **caractérisé en ce que** la zone d'angle est disposée dans une zone supérieure de l'objet lumineux de référence (3') par rapport à la direction d'élévation de la fumée.

7. Dispositif de détection de fumée (1) selon l'une quelconque des revendications précédentes, **caractérisé en ce que** ladite au moins une particularité de détection de fumée est une augmentation de l'objet lumineux fixe (3) saisi, générée par la modification de la diffusion de lumière.

8. Dispositif de détection de fumée (1) selon la revendication 7, **caractérisé en ce que** ladite au moins une particularité de détection de fumée est détectée par une comparaison de la circonférence et/ou de la surface de l'objet lumineux de référence (3') avec la circonférence ou la surface de l'objet lumineux fixe (3) saisi.

9. Dispositif de détection de fumée (1) selon l'une quelconque des revendications précédentes, **caractérisé en ce que** ladite au moins une particularité de détection de fumée est un éclaircissement de la zone de diffusion de lumière de l'objet lumineux fixe (3) saisi, généré par la modification de la diffusion de lumière.

10. Dispositif de détection de fumée (1) selon l'une quelconque des revendications précédentes, **caractérisé en ce que** ladite au moins une particularité de détection de fumée est une modification d'un contraste de l'objet lumineux fixe (3) saisi, générée par la modification de la diffusion de lumière.

11. Dispositif de détection de fumée (1) selon l'une quelconque des revendications précédentes, **caractérisé en ce que** le dispositif de détection de fumée (1) comprend un dispositif d'affichage, le dispositif d'affichage étant réalisé pour afficher les images, le dispositif d'évaluation (4) transmettant la particularité de détection de fumée détectée au dispositif d'affichage, le dispositif d'affichage étant réalisé pour afficher par images la particularité de détection de fumée sur les images de la zone de surveillance.

12. Dispositif de détection de fumée (1) selon l'une quelconque des revendications précédentes, **caractérisé en ce que** la modification saisie de la diffusion de lumière est abandonnée comme particularité de détection de fumée en cas de soupassement d'une valeur limite de temps prédéfinie.

13. Procédé permettant de détecter au moins une particularité de détection de fumée par un dispositif de détection de fumée (1) selon l'une quelconque des revendications précédentes, un dispositif d'évaluation (4) du dispositif de détection de fumée (1) saisissant au moins un objet lumineux sur les images, le dispositif d'évaluation (4) détectant comme ladite au moins une particularité de détection de fumée une modification d'une diffusion de lumière dudit au moins un objet lumineux fixe (3) saisi.

14. Programme informatique comprenant des moyens de code programme pour effectuer toutes les étapes du procédé selon la revendication 13 si le programme est exécuté sur un ordinateur et/ou sur le dispositif de détection de fumée (1) selon l'une quelconque des revendications 1 à 12.
